# EUROPEAN PATENT APPLICATION

(11) **EP 4 752 070 A1**
(43) Date of publication of application: **03.06.2026**
(21) Application number: 24216173.5
(22) Date of filing: 28.11.2024
(51) Int. Cl.: B64U 10/14, B64U 30/21, B64U 50/11, B64U 50/27, B64U 50/33, B64D 35/02, B64D 35/04

(54) **UNMANNED AERIAL VEHICLE WITH ENHANCED RANGE CAPABILITIES**

(71) Applicant: EAS Robotics, 2630 Aartselaar (BE)
(72) Inventor: SANGUINETTI, Alain, 2630 Aartselaar (BE)
(74) Representative: Calysta NV

(57) **Abstract**

An unmanned aerial vehicle, UAV (100), comprising a fuel-driven motor (1001), a propulsion system (101-104), a transmission assembly (106) to transfer power from the motor to the propulsion system (101-104), and a control unit to control the lift and thrust, wherein the transmission assembly comprises epicyclic gear trains associated with propellers wherein the power is transferred from the motor (1001) to the epicyclic gear trains, wherein a control unit is configured to control a set of actuators (703) such that when the mechanical power is transferred the fuel-driven motor's operation is maintained at its most efficient working point.

## Description

### Technical Field

The present invention relates to unmanned aerial vehicles (UAVs), commonly referred to as drones. More specifically, it relates to an improved system and associated method for extending the operational range of such vehicles, without compromise on maneuvrability and reliability.

### Prior art

Unmanned aerial vehicles have seen substantial growth in various commercial and non-commercial applications due to their versatility, ease of deployment, and capability to reach areas that may be inaccessible or hazardous for manned vehicles. While advances in UAV technology have made aerial tasks increasingly feasible, operational range remains a limiting factor for many potential applications. Range constraints are typically due to power limitations, signal connectivity challenges, and environmental factors. In other words, there are still technologies to develop, that optimize range/weight ratio on such UAVs, that could offer a wider range of weight capacities.

Existing solutions to extend UAV range include increasing battery capacity, incorporating solar energy, or deploying relay drones to boost communication. However, each of these solutions presents significant drawbacks, such as added weight, complexity in fleet management, or susceptibility to weather conditions. As a result, there remains a need for a UAV design that optimizes power efficiency, and maintains operational stability, thus significantly extending its range while minimizing costs and complexity.

Document EP3835562A1 titled "Aircraft Hybrid Propulsion System" discloses a hybrid propulsion system for aircraft, combining both electric and fuel-based propulsion to improve energy efficiency, reduce emissions, and increase operational flexibility. The system integrates electric motors with traditional engines, enabling the aircraft to operate in various modes, including pure electric, hybrid, and traditional fuel-based propulsion, depending on flight phase or power demands. A drawback of the hybrid propulsion system disclosed in this document is the added complexity and weight associated with integrating both electric and fuel-based propulsion components. This complexity leads to higher manufacturing and maintenance costs, as well as increased technical challenges in ensuring seamless operation and reliability across different flight modes.

Document EP2196392A2 titled "Hybrid Power for Ducted Fan Unmanned Aerial Systems" likewise describes a hybrid propulsion system specifically designed for unmanned aerial systems (UAS) with ducted fan configurations. It combines an internal combustion engine with an electric motor to improve the efficiency, endurance, and reliability of the UAS. The system allows for multiple operational modes, including pure electric, engine-only, and hybrid mode, which can be optimized according to the mission requirements, such as extended flight time or reduced noise during specific operations. Again, a drawback of this hybrid system is the added complexity and weight associated with integrating both an internal combustion engine and an electric motor within the compact space of a ducted fan UAS. This increased weight may reduce the available payload capacity, and the system's complexity could raise manufacturing costs, reduce reliability, and complicate maintenance, potentially limiting its application in smaller UAS or short-duration missions where payload and simplicity are critical. Another drawback is the limited controllability of the ducted fans system. Moreover, there is no space provided to carry a large payload.

Document US20060016930A1 titled "Sky Hopper" discloses a vertical take-off and landing (VTOL) aircraft concept that incorporates a dual-propulsion mechanism for improved manoeuvrability and efficient transitions between vertical and horizontal flight. The "Sky Hopper" is designed with both rotor and jet propulsion systems, allowing it to hover, take off, and land vertically like a helicopter, while also achieving high speeds in forward flight similar to a fixed-wing aircraft. This dual-propulsion design aims to provide versatility for various applications, including urban transport and search-and-rescue missions, by combining the benefits of both helicopter and airplane functionalities. A drawback of the "Sky Hopper" concept is the complexity of integrating rotor and jet propulsion within a single platform, which significantly increases the weight, mechanical complexity, and fuel consumption of the aircraft. This added complexity does not only raise production and maintenance costs but also limits the range and payload capacity due to the need to accommodate multiple propulsion systems thereby impacting the aircraft's overall efficiency and operational feasibility for certain applications.

Document US20220348342A1 titled "Unmanned Aerial Vehicle Parallel Hybrid Drive Assembly with Continuous Belt Tension Modulation" describes a parallel hybrid drive system for unmanned aerial vehicles (UAVs) that incorporates a continuous belt tension modulation mechanism. This assembly combines an internal combustion engine with an electric motor, allowing for seamless switching between or concurrent use of both power sources. The belt tension modulation system adjusts automatically to ensure optimal belt performance and reduce slippage or wear, thereby enhancing the durability and efficiency of the hybrid drive. Again, a drawback of this system is the added weight and complexity introduced by the continuous belt tension modulation mechanism, which increases the overall weight of the UAV, reducing its payload capacity. Furthermore, the mechanical impact of changing ratios between one arm and the other increases the torque on one side thereby reducing the overall effectiveness of the system. Typically, these designs offer moderate performance in both configurations, as forward flight requires a highly streamlined design, while vertical flight demands a high power output.

Document WO2019082043A2 titled "Vertical Take-Off and Landing Aircraft and Transformation Gear Sets for Same" also describes a VTOL aircraft equipped with a specialized transformation gear set designed to enable transitions between vertical and horizontal flight modes. This aircraft design integrates both rotor-based vertical lift and forward-thrust capabilities, with the transformation gear set allowing the propulsion system to reconfigure between hovering and forward flight. A drawback of this system is the increased mechanical complexity and weight associated with the transformation gear set, which may negatively impact the aircraft's fuel efficiency and overall payload capacity. The sophisticated gear mechanism could lead to higher production and maintenance costs, as well as an increased risk of mechanical failures during critical transition phases, potentially limiting the aircraft's reliability and practical viability for certain missions or in challenging operating conditions.

Document CN111196357A titled "Fuel Oil Power Variable-Rotating-Speed Control Composite Wing Unmanned Aerial Vehicle" discloses a UAV design featuring a composite wing structure powered by a fuel-based engine with variable speed control. This system allows the UAV to adjust its rotational speed dynamically for different phases of flight, such as take-off, cruising, and landing. A drawback of this design is the increased weight and complexity introduced by the variable speed control mechanism, which could reduce payload capacity and add to the UAV's overall operational costs. The need for precise control of the rotational speed increases the system's mechanical demands, potentially leading to higher maintenance requirements and a greater likelihood of mechanical issues, especially during extended missions where reliability is critical. Furthermore, in regard of the need of precise control, a good maneuverability may be harder to get, as it is harder to control power of a fuel-based engine with precision, compared to an electrical engine

As observed by the inventor, these limitations in the prior art indicate a need for a drone with an extended operational range that maintains a simple design yet providing sufficient lift and thrust for enhanced controllability and useful payloads, while at the same time avoiding added complexity that could increase costs and maintenance demands.

### Brief summary of the invention

It is the object of the invention to provide a drone with an extended operational range that maintains a simple design, avoiding added complexity that could increase costs and maintenance demands.

According to the invention, this object is solved by an unmanned aerial vehicle, UAV, according to the first claim, the UAV comprising:
- a fuel-driven motor configured to generate mechanical power;
- a propulsion system comprising a set of propellers configured to achieve controlled drive of the UAV by generating lift and thrust;
- a transmission assembly operatively connected between the fuel-driven motor and the propulsion system, the transmission assembly configured to transfer the mechanical power from the fuel-driven motor to the propulsion system;
- a control unit configured to control the generated lift and thrust;
CHARACTERIZED IN THAT
the transmission assembly comprises:
   - a set of epicyclic gear trains, each epicyclic gear train associated with a corresponding propeller and each comprising:
      ∘ a central sun;
      ∘ at least one planet gear engaged with the central sun and mounted on a rotatable carrier;
      ∘ and a ring gear surrounding the planet gear(s) engaged therewith;
      wherein the mechanical power is transferred from the fuel-driven motor to the propellers through a mechanical link between the set central suns and the rotatable carriers;
   - a set of actuators, each actuator engaged with a ring of an associated epicyclic gear train and configured to control a movement thereof;
and wherein the control unit is further configured to control the set of actuators such that when the mechanical power is transferred the fuel-driven motor's operation is maintained at its most efficient working point.

Firstly, the various technical elements, units and systems in the claim will be discussed to have a better understanding of the invention.

An Unmanned Aerial Vehicle (UAV), commonly known as a drone, is an aircraft that operates without a human pilot onboard. UAVs are remotely controlled or autonomously programmed to perform a variety of tasks, from aerial photography and surveillance to delivery and search-and-rescue operations. The term drone is interchangeable with the term Unmanned Aerial Vehicle (UAV). Both terms refer to the same technology: an aircraft operating without a human pilot onboard, capable of remote or autonomous control for various applications.

A fuel-driven motor is a type of engine specifically designed to convert fuel energy into mechanical power. This motor operates by combusting fuel thereby generating mechanical power, which can be harnessed to perform a range of tasks, for example powering drones. The fuel-driven motor can be one of the group of a gasoline engine, a diesel engine, a natural gas engine, a propane engine, a methanol engine, a two-stroke engine, a turbojet engine, a jet engine, a rotary engine, a biofuel engine, a hydrogen engine.

A methanol engine is a type of radio-controlled, RC, engine that doesn't need ignition, has very high speed and good power output, while at the same time has low pollutants emission.

A turboprop engine is a type of gas turbine engine designed to drive a propeller, combining jet engine power with propeller efficiency for low to medium-speed flight. Most of the engine's energy is used to drive the propeller, which generates thrust by moving a large mass of air, making turboprops fuel-efficient for regional and short-haul flights. This engine is well-suited for use in larger systems when implemented in the UAV.

Depending on the required payload capacity, multiple engines may be utilized. For instance, a fully redundant configuration could comprise two engines, each connected to the shared set of propellers. In certain embodiments, the power train is configured to be scalable, allowing integration of multiple fuel-powered engines to support large-scale, high-payload aerial vehicles. Alternatively, a dual-engine configuration may involve one engine dedicated to each side of the UAV.

A propulsion system of a drone comprises a set of propellers configured to achieve controlled drive by generating both lift and thrust. These propellers, driven by the fuel-driven motor as will be explained, convert mechanical energy into the force required for the drone to ascend, manoeuvre, and maintain stability in the air.

Furthermore, the power train can also be designed with sufficient scalability to enable applications that involve carrying multiple passengers and, potentially, a pilot. This scalability would make the power train suitable for use in vertical take-off and landing (VTOL) air taxi solutions, where it could be paired with a hydrogen fuel-based propulsion system to deliver efficient, sustainable, and high-capacity transport capabilities.

A transmission assembly is a mechanism designed to transfer mechanical power from the fuel-driven motor to the set of propellers. It typically comprises gears, shafts, and other connecting elements that work together to adjust the speed, direction, and torque of the power being transmitted. As the set-up of the transmission assembly is part of the invention, it is further discussed into detail below.

A control unit is a central component that manages the operational functions of the drone by coordinating and regulating the various components and systems. It receives input data from, for example, sensors, user commands, or pre-programmed instructions and processes this information to adjust the behaviour of components like the propulsion system and the fuel-driven motor. The control unit makes real-time calculations and sends signals to achieve precise control over movements, speed, and positioning, ensuring smooth and responsive operation.

An epicyclic gear train, also known as a planetary gear system, is a compact and efficient arrangement of gears used to achieve varying speed and torque outputs in mechanical systems. It consists of three main components: a central sun gear, a rotatable carrier holding one or more surrounding planet gears, and an outer ring gear, in short a ring, with teeth that mesh with the planet gears. By controlling which component is held stationary or driven, the epicyclic gear train will produce different output characteristics, including high torque, speed reduction or acceleration, or direct driven, as will be discussed.

Another expression for the central sun gear is the central gear, central sun or in short the sun gear. Another expression for the rotatable carrier is the carrier frame. Another expression for the outer ring gear is a moon gear, annulus gear, ring gear or in short a ring.

An actuator is a device designed to convert energy, typically electrical, hydraulic, or pneumatic, into mechanical motion. This motion will be in the form of a rotary movement and is engaged with the ring of an epicyclic gear train.

Further note that an energy source will be present to provide energy to the elements, such as the control unit and the actuators As will be discussed below, this energy source might be different from the power source to supply electrical energy to electrical motors according to the sixth claim.

Besides the power source the UAV also comprises a fuel storage for storing fuel for the fuel-driven motor. According to an embodiment, this fuel storage can be detachable.

The UAV may further comprise a central gearbox connected to the fuel-driven motor's output shaft and configured split and distributed torque to the set of propellers through the mechanical links. This is dependent on the number of propellers present. Preferably there are three of four propellers present, but less or more is also possible.

A detailed explanation will now be provided to demonstrate that the UAV according to the first claim is novel and inventive compared to the prior art.

Each propeller is engaged with an epicyclic gear train. In other words, per propeller there is an epicyclic gear train. The mechanical power originating from the fuel-driven motor is transferred to the propellers through a mechanical link between the central suns and the rotatable carries. This means that there are as many mechanical links as there are propellers. Note that these links can partly coincide with each other as will be explained. The transfer of the mechanical power from the fuel-driven motor to a propeller goes via the central sun and the rotatable carrier of the associated epicyclic gear train. Preferably the mechanical link goes from the fuel-driven motor to a rotatable carrier, to a central sun and finally to a propeller as claimed by the second claim. Alternatively, the mechanical link goes from the fuel-driven motor to a central sun, to a rotatable carrier and finally to a propeller as claimed by the third claim. However, the two possibilities are disclosed and claimed since they relate to the same inventive concept.

The mechanical links can be adjusted interchangeably based on the desired reduction ratio between the fuel-driven motor and the set of propellers.

Per epicyclic gear train the ring is engaged with an actuator, which is the same as saying that an actuator is engaged with a ring of an associated epicyclic gear train. Each actuator is further configured to control the movement of the ring to which it is engaged.

Further note that the speed of a motor is typically expressed as its rotational speed. The official unit for rotational speed in the International System of Units (SI) is radians per second (rad/s). Although revolutions per minute (RPM) is commonly used in engineering for practical purposes. In this disclosure, any reference to the speed of the motor and/or gears should be understood as referring to its rotational speed, which describes the rate at which the shaft completes its rotations over a given time period. This parameter remains consistent regardless of the units used to express it, whether in revolutions per minute (RPM), radians per second (rad/s), or any other unit of rotational measurement.

When the rotatable carrier is driven by the fuel-driven motor and the ring is held fixed, it will cause the rotatable carrier to turn as well with the mechanical power provided by the fuel-driven motor. By fixing the ring, it can't move and forces the planet gears to rotate as they orbit around the ring. This rotation of the planet gears causes the central sun to rotate as well. Furthermore, it will spin faster than the input speed of the carrier, thereby reducing the torque. In other words, this set-up according to the second claim provides a speed increase of the central sun, while the torque will be lower than the input torque applied to the carrier due to this speed increase, whereby the exact speed ratio depends on the number of teeth in the gears.

Next, when the actuator starts moving the ring while the fuel-driven motor still drives the carrier, the sun's speed will depend on the relative motion between the carrier and the ring gear. This is because there are now two sources of motion being the carrier and the ring impacting the speed and rotation of the sun. If the ring rotates in the same direction as the carrier, the output speed of the sun decreases compared to the situation where the ring was held fixed. Depending on the gear ratios, the sun may even reverse direction or come to a halt if the speeds match in a specific ratio. If the ring rotates in the opposite direction to the carrier, the sun gear speed will increase as the planet gears experience a more significant differential motion between the carrier and the ring.

The main input to the propulsion system is the mechanical power originating from the fuel-driven motor. The torque and speed thereof will be influenced by the speed ratio between the ring and the sun as well as the overall gear ratios of the transmission assembly. To control the generated lift and thrust of the UAV by the control unit, the speed of the propellers is essential. With the presence of the epicyclic gear train, the effective speed of the sun, and thus of a propeller, depends on the relative speed of both the carrier and the ring gear.

As explained, the changing of the speed and/or direction of the ring allows for variable output speed at the sun. Thus, by varying the ring's speed relative to the carrier, the output speed at the sun can be controlled, thereby speeding up or slowing down the propeller's speed depending on the direction and magnitude of the ring's rotation. At the same time this does not change the speed of the fuel-driven engine, which stays common to all propellers.

Furthermore, the torque that the output shaft of the fuel-driven motor experiences is dependent on the resistance from the other gears of the transmission assembly, such as the sun and the ring, and on the load the propellers experience. The latter one is on its turn depending on the operational load conditions. Thus, the torque on the carrier is affected by the load on both the ring and the sun, whereby, as said, the load on the sun is set by the operational conditions and therefore, at first, externally imposed. On the other hand, the torque on the carrier can be affected by the load on the ring. If the ring rotates in the same direction as the carrier, the torque load on the carrier decreases. This is because the planet gears experience less differential motion, thereby reducing the torque transfer required for the carrier. If the ring rotates in the opposite direction of the carrier, the torque load on the carrier increases, as the differential action between the ring and the carrier increases. In this situation more torque is required from the carrier to drive the same load on the sun gear.

Through the presence of epicyclic gear trains per propeller, the fuel-driven motor can operate within a specific range of rotational speed and load. At the same time, the speed of each propeller can be adjusted depending on the required lift and thrust by controlled movements of the rings by use of the associated actuators. This way, a balance can be made between the motor's speed and load on the one hand, and the speed of the propellers on the other hand. Thus, by balancing the motor's speed and load to produce an anticipated torque, optimal efficiency is achieved while minimizing fuel consumption. This procedure of optimizing torque generation and fuel efficiency is managed by the control unit.

The most efficient working point of a fuel-driven motor, often referred to as the "sweet spot," is where the motor achieves its highest thermal efficiency. This point occurs when the motor's load and speed are optimized to minimize fuel consumption while maximizing output. Typically, this happens at a precise rang of speed and load, where the internal combustion process is efficient, minimizing waste heat and reducing mechanical losses. For example, for two small stroke engines, it can be above 10 000 revolutions per minute.

Maintaining the fuel-driven motor's operation at its most efficient working point therefore means that within boundaries set by the required operational conditions on the one hand, and the potential range of operation of the movements of the actuators on the other hand, the most efficient working point is that working point within said boundaries that is the closest to the sweet spot.

Thus, the control unit is configured to simultaneously control the generated lift and thrust on the one hand, and controlling the set of actuators for maintaining the operation of the fuel-driven motor at its most efficient working point.

The control unit is configured to manage and adjust multiple parameters in real time, continuously seeking an optimal balance between desired lift and thrust and maintaining or seeking for the fuel-driven motor's sweet spot as explained above. So by adjusting the speed and direction of each propeller, the propulsion system enables control over the drone's altitude, direction, and velocity, allowing for movements and sustained hovering. This adjusting is done by dynamically moving the respective rings of the epicyclic gear trains for each propeller. At the same time, when adjusting the rings the control unit seeks for the sweet spot. There is thus a continuously adjusting to respond to changing conditions and maintain the desired equilibrium between said two conditions. Through this approach, the operational range of the drone is enhanced by the optimized utilization of the fuel-driven motor.

According to an embodiment, the mechanical link may comprise a link from the fuel-driven motor to the set of central suns and a link from the set of rotatable carries to associated propellers as claimed in the third claim. It should be understood that the same inventive concept applies in the sense that it is again the movements of the rings of the epicyclic gear trains that is controlled to continuously seeking an optimal balance between desired lift and thrust and maintaining or seeking for the fuel-driven motor's sweet spot as explained above. Compared to the configuration with the mechanical link according to the second claim, the movements of the rings will occur in the opposite directions.

According to an embodiment, the set of actuators are engaged with the associated rings through a set of worm drives. A worm drive is a mechanical arrangement comprising a helical gear resembling a screw. This configuration is especially suited for applications demanding high torque and controlled, low-speed movements. The worm drive's inherent high reduction ratio allows for significant torque reduction in a small space. It has further the advantage of having a self-locking ability, preventing undesired back-driving and enhancing safety of the propellers. Consequently, instead of directly adjusting the movements of the rings by the actuators, they are driving the worm drives, which in turn drive the rings.

According to a preferred embodiment, the set of actuators comprises a set of electrical motors configured to operate in a driving mode to generate mechanical power for controlling the movement of an associated ring, the set of electrical motors operatively connected to a power source configured to supply electrical energy.

According to an embodiment, the control unit is further configured to detect a deceleration condition of an electrical motor and, in response, transition said electrical motor from the driving mode to a regenerative mode thereby converting mechanical energy from the decelerating motor into energy to the power source.

This further extends the range of the UAV since by maintaining the fuel-driven motor's operation at its most efficient working point, it is even possible to charge the power source depending on the desired lift and thrust.

According to an embodiment, the power source is a battery pack and/or a capacitor bank.

A battery pack is a compact assembly of multiple batteries or cells connected in series or parallel, designed to supply electrical power to the electrical motors. Additionally or alternatively, the power source is a capacitor bank. A capacitor bank is an array of multiple capacitors connected in parallel or series to store and deliver large amounts of electrical energy as needed.

Alternatively, the electric power can originate from a starter-generator of the fuel-driven engine if present. Although less preferred, this does not require a battery pack and/or a capacitor bank.

According to an embodiment, the power source is a detachable power source. This offers flexibility and convenience, since it allows to quickly swap out depleted batteries or capacitor banks with fully charged ones. Furthermore, they allow for easy maintenance and upgrades, as users can replace or upgrade the power source without replacing the entire UAV.

According to a second aspect of the invention a method is disclosed for controlling the UAV according to the first aspect of the invention comprising the steps of:
- controlling the propulsion system to achieve controlled drive of the UAV by generating lift and thrust; and
- simultaneously controlling the actuators such that when the mechanical power is transferred the fuel-driven motor's operation is maintained at its most efficient working point.

According to a third aspect a control unit is disclosed configured to perform the method according to the second aspect.

According to a fourth aspect an unmanned surface vehicle is disclosed comprising a fuel-driven motor configured to generate mechanical power; a propulsion system comprising a set of propellers configured to achieve controlled drive of the unmanned surface vehicle by generating thrust; a transmission assembly operatively connected between the fuel-driven motor and the propulsion system, the transmission assembly configured to transfer the mechanical power from the fuel-driven motor to the propulsion system; a control unit configured to control the generated thrust; wherein the transmission assembly comprises a set of epicyclic gear trains, each epicyclic gear train associated with a corresponding propeller and each comprising a central sun; at least one planet gear engaged with the central sun and mounted on a rotatable carrier; and a ring gear surrounding the planet gear(s) engaged therewith; wherein the mechanical power is transferred from the fuel-driven motor to the propellers through a mechanical link between the set central suns and the rotatable carriers; a set of actuators, each actuator engaged with a ring of an associated epicyclic gear train and configured to control a movement thereof; and wherein the control unit is further configured to control the set of actuators such that when the mechanical power is transferred the fuel-driven motor's operation is maintained at its most efficient working point.

The unmanned surface vehicle is for example an unmanned boat. It is a watercraft designed to operate autonomously or be remotely controlled without an onboard crew. This technology typically incorporates GPS, radar, sonar, and advanced sensors, enabling it to navigate waterways, avoid obstacles, and collect environmental or tactical data. Applications for these vessels include environmental monitoring, maritime surveillance, search and rescue, and defence operations, where the ability to operate remotely enhances safety, efficiency, and flexibility. This emerging field presents significant advancements in autonomous navigation, propulsion efficiency, and payload versatility, enabling broader utilization across commercial, scientific, and military sectors. The unmanned boat has preferably two propellers.

### Brief description of the Drawings

Figure 1 is a front view of the UAV according to an embodiment of the invention;
Figure 2 is a tilted view of the UAV according to Figure 1, with the gearbox visible;
Figure 3 is a partial bottom view showing details of the gearbox;
Figure 4 is a partial side view corresponding to the view in figure 3;
Figure 5 is a top view of the UAV according to an embodiment;
Figure 6 illustrates a mechanical link between the fuel-driven engine motor and a propeller;
Figure 7 is a detail of the gearbox indicating the different elements;
Figure 8 is a schematic representation of the mechanical transmission for a propeller;
Figure 9 has the same schematic representation as in Figure 8, with a worm drive;
Figure 10 is a complete schematic representation of the mechanical transmissions with four propellers.

### Detailed description of an embodiment of the invention

Other characteristics and advantages of the present invention will be derived from the non-limitative following description, and by making reference to the drawings and the examples.

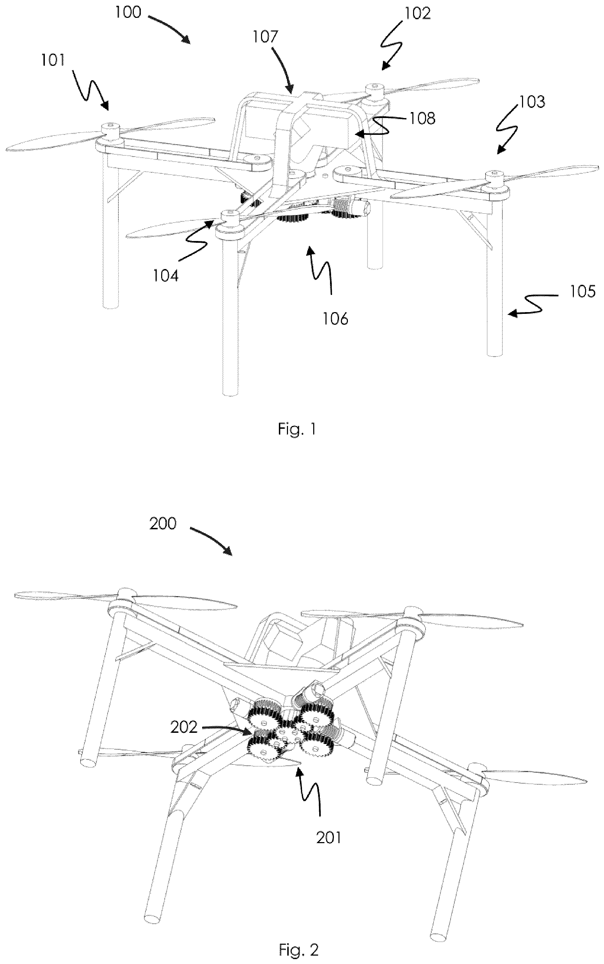

Figure 1 presents a front view, labelled as 100, of the UAV (Unmanned Aerial Vehicle) according to one embodiment of the invention. This embodiment comprises a set of propellers, indicated by reference numbers 101 through 104, which provide the necessary lift and thrust for the UAV. Each propeller is mounted with a corresponding support leg, represented by reference number 105. These support legs 105 are designed to ensure that the UAV can be stably positioned on a surface, preventing tipping or imbalance during landing and take-off.

In addition to the propellers and support legs, the UAV is equipped with a fuel-driven engine, identified by reference number 108, which powers the UAV and drives the propellers 101-104. The structure also comprises a frame, denoted by reference number 107, which serves as a durable and secure housing for the various components, ensuring stability and structural integrity during flight. The frame 107 thus holds all elements in a fixed arrangement, resisting external stresses. Furthermore, the UAV comprises a gearbox, labelled as 106, which optimizes the power transmission from the fuel-driven engine 108 to the propellers 101-104, allowing for controlled and efficient propulsion of the UAV.

In Figure 2, which provides an angled illustration labelled as 200 of the UAV according to Figure 1, the gearbox 201 is clearly visible at the underside of the UAV. This gearbox is positioned centrally within the UAV, contributing significantly to its overall stability by evenly distributing weight and balancing the vehicle during flight.

Additionally, the gears, referenced by number 202, are also visible in this illustration and will be further discussed in relation to their functionality and mechanical advantages within the design. It should be understood, however, that the UAV may also be equipped with a protective cover over the gears. This cover serves the dual purpose of preventing contamination of the gears during use, especially in challenging environments, and offering protection to these components from external impacts or debris. Such a cover can enhance the durability and reliability of the UAV by reducing wear and maintaining the integrity of the mechanical system over time.

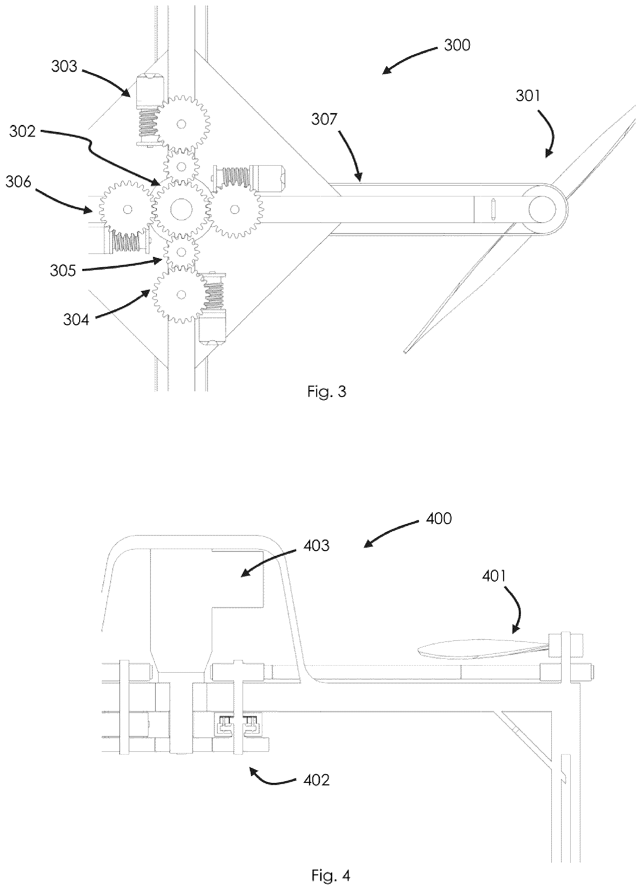

Figure 3 provides a partial view, labelled as 300, of the underside of the UAV, where various components of the gearbox are visible. It should be noted, however, that due to the specific configuration of the gearbox, not all elements within it are fully exposed in this view. The arrangement of the internal components and the housing restricts visibility to certain parts only, focusing on key elements.

In this illustration, a propeller, marked with reference 301, is shown, providing context to the gearbox's role in driving this propeller. Additionally, a belt transmission 307 connecting the gearbox to the propeller is visible, illustrating the method by which power is transferred from the gearbox to enable the propeller's rotation.

The drive shaft of the fuel-driven engine 108 is centrally illustrated, equipped with a gear designated as 302. This gear is the primary drive gear within the system, directly transferring power from the engine 108 to the propellers 101-104 as will be explained. Additionally, each of the propellers 101-104, in this case, four in total, is equipped with an individual gear, such as the one referenced as 306. The central gear 302 directly drives each of these propeller gears, ensuring that each propeller receives the necessary rotational force to operate effectively.

Two of the gears are driven directly, while for the two others there is an additional gear, such as the one labelled 304, which is powered indirectly through an intermediary gear 305. This intermediate gear 305, itself also driven by the central gear 302, serves as a directional modifier within the system. Due to this configuration, the rotation direction of gear 304 is reversed compared to that of gear 306, allowing for controlled counter-rotation. This counter-rotation effect is critical in maintaining balance and stability within the UAV, as it counteracts torque forces generated by the propellers.

Figure 3 further illustrates a worm drive 303 driven by an actuator. This worm drive is mechanically connected to the ring gear of the epicyclic gear train associated with a respective propeller. The worm drive 303 and actuator setup introduces an additional layer of control over the propeller's movement. As the actuator engages, it drives the worm drive 303, which, in turn, interacts with the ring gear of the respective epicyclic gear train. This interaction allows for precise adjustments to the rotational speed and direction of each propeller, giving the UAV enhanced control over its flight dynamics. The mechanical advantage of the worm drive 303 is that it can provide high torque at lower speeds, making it ideal for fine-tuning propeller adjustments even while in flight.

Such a gear configuration ensures not only efficient power distribution to each propeller but also precise control over the UAV's stability and manoeuvrability during flight by managing the direction and speed of rotation across different gears.

Figure 4 presents a similar partial view as shown in Figure 3, but from a side perspective, labelled here as 400. This side view offers additional clarity on the spatial arrangement of the components. In this illustration, the fuel-driven engine, marked as 403, is depicted in relation to the propeller 401, allowing for a clearer understanding of their alignment and connection within the UAV's structure.

This side perspective reveals how the fuel-driven engine 403 is positioned to drive the propeller 401 efficiently. The view highlights the connection between the fuel-driven engine 403 and the propeller 401 assembly, showcasing how power is seamlessly transferred from the fuel-driven engine to facilitate propeller rotation. This configuration is designed to maximize thrust while maintaining compactness and structural balance within the UAV.

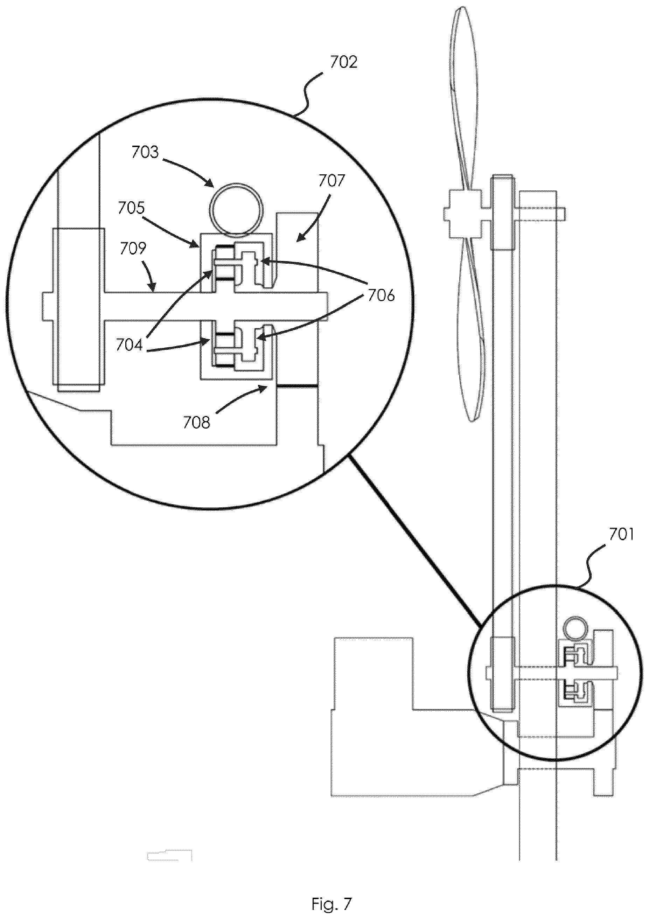

Reference 402 points once again to the gearbox, which is a critical component of the UAV's power transmission system and is explored in greater detail in Figure 7. Therein, the internal structure and configuration of this gearbox will be examined closely, shedding light on the specific design choices that enable its efficiency and durability. This detailed view will allow for an understanding of the gearbox's components, including the arrangement of gears and other mechanical elements, and will explain how these elements work together.

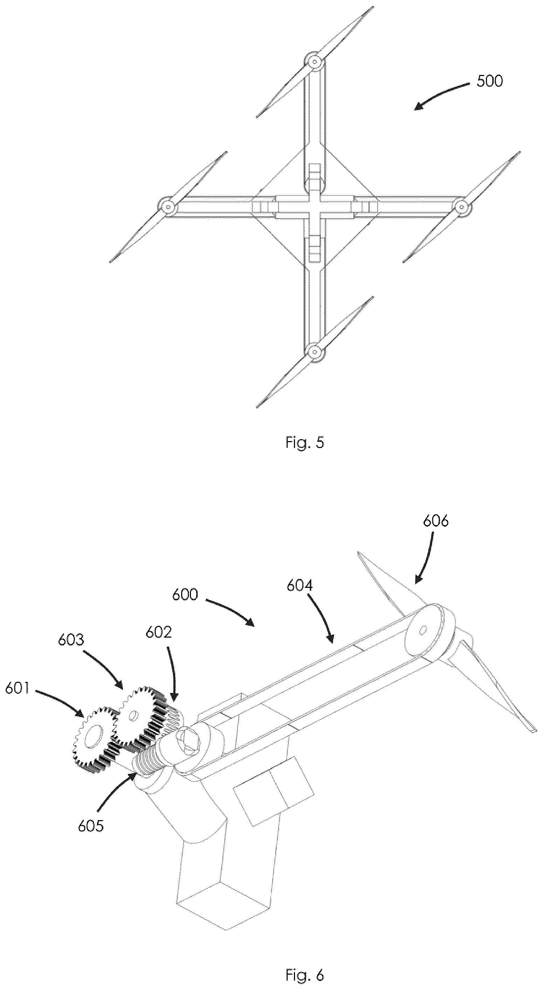

Figure 5 provides a top view, labelled as 500, of the UAV, where it is clearly visible that the components are arranged in a rotationally symmetrical pattern. This symmetry in layout plays a crucial role in ensuring the stability of the UAV during flight. By positioning the components in a balanced, equidistant manner around a central axis, the design minimizes uneven weight distribution and reduces the risk of unwanted rotational forces that could destabilize the UAV. This rotational symmetry contributes to smooth flight dynamics, allowing for balanced lift and thrust on all sides. The symmetric placement of key components, such as the propellers, gearbox, and fuel-driven motor, helps the UAV maintain a steady hover and respond predictably to directional changes, making it more agile and easier to control. This design choice enhances overall flight performance and reliability, especially in situations requiring precise manoeuvring.

Figure 6 illustrates a mechanical link between the fuel-driven engine and the propeller 606. The gear labelled with reference 601 represents the central drive shaft of the fuel-driven engine, acting as the main output for transferring power from the engine. The gear referenced as 603 is the rotatable carrier of the epicyclic gear train of propeller 606. This rotatable carrier 603 interacts with planet gears in the epicyclic system, which are not visible in this illustration. Further, the propeller 606 is powered through its respective epicyclic gear train via a belt transmission, indicated by reference 604. This belt transmission 604 bridges the connection between the epicyclic gear train and the propeller 606 through the central sun, ensuring that the power from the engine is effectively directed to maintain the propeller's optimal rotational speed. The belt transmission further reduces noise and vibration, enabling a smoother operation, while the epicyclic gear train system enables a compact and efficient setup. This combination allows for high precision and stability, enhancing the UAV's overall flight performance and reliability.

The gear 601 is driven by the engine and engages with gear 603, which is the rotatable carrier of the epicyclic gear train. The rotatable carrier 603 transmits power to the planet gears, which, in turn, drive the central sun gear. The rotation of the central sun gear facilitates the motion of the propeller 606 through the belt transmission denoted by reference 604. This arrangement forms part of an epicyclic gear train, wherein the ring gear, identified by reference 602, is visible. The movement of the ring gear is regulated by an actuator, designated as reference 605, ensuring controlled operation of the gear system and propeller 606 as discussed above.

Referring to Figure 7, as previously mentioned, an explanation will be provided on how the power transmission occurs. Figure 7 will illustrate the detailed mechanics and arrangement involved in transferring power from the fuel-driven engine through the epicyclic gear trains and ultimately to the propellers.

Reference 702 provides an enlarged, detailed illustration of reference 701, allowing for a closer examination of specific elements and components within the epicyclic gear train. This zoomed-in view gives insight into the finer mechanical details, highlighting the intricate design and precise engineering involved.

By focusing on reference 702, one can observe the positioning, alignment, and interconnection of various subcomponents that may not be visible or as easily understood in the broader illustrations of the other figures. This detailed view is essential for understanding how each part contributes to the functionality of the UAV. It reveals the interactions that allow for smooth operation, effective power transfer, and durability within the mechanism, showcasing the thoughtful engineering that optimizes the UAV's performance.

Reference 707 is the rotatable carrier which is power by the fuel-driven engine. This is illustrated by reference 708 which indicates that the rotatable carrier 707 is engaged with the engine. References 706 illustrate the connections linking the rotatable carrier 707 to the planet gears 704 within the epicyclic gear train. As the rotatable carrier 707 rotates, these connections 706 ensure that the planet gears 704 rotate as well. Further, reference 705 denotes the ring gear, while reference 709 corresponds to the sun gear within the epicyclic gear train. It is important to note that the sun gear 709 is configured as a drive shaft, providing the advantage of directly powering the propeller. Finally, reference 703 illustrates the actuator which is engaged with the ring gear 705 for controlling its movement.

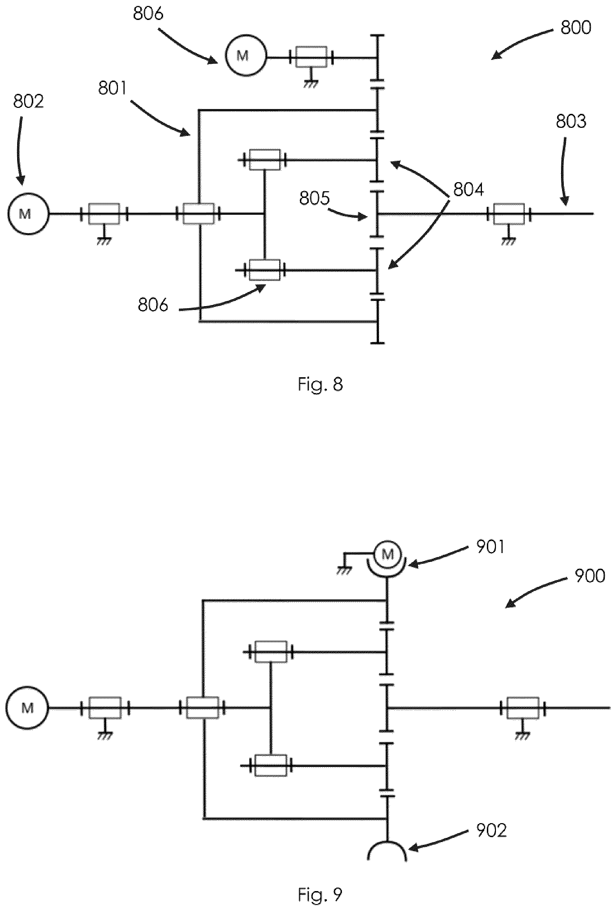

Figures 8 to 10 provide a schematic representation of the power train, detailing the transmission of power from the engine to the propellers. Referring to schematic 800, the fuel-driven motor 802 is connected to the rotatable carrier 806, which drives the rotation of the planet gears 804. The ring gear, depicted by reference 801, has its movement controlled by actuator 806. Further, the sun gear, identified as reference 805, transmits power to a propeller via the shaft 803.

Figure 9 follows the same structure as Figure 8. In this schematic, labelled 900, the actuator regulates the movement of the ring gear through a worm gear assembly, designated as references 901 and 902.

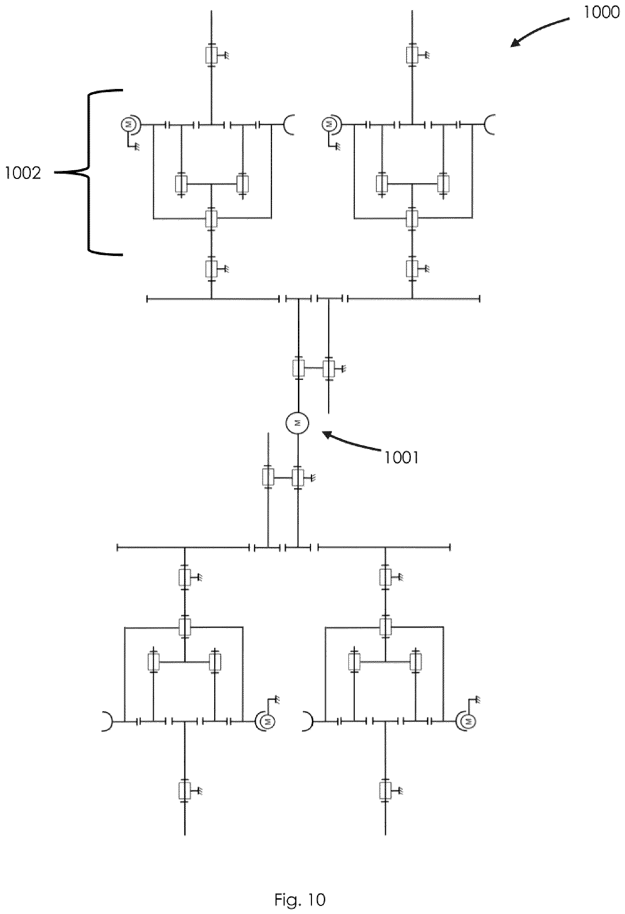

In conclusion, the schematic 1000 in Figure 10 shares the same structure as Figures 8 and 9. This depiction features four epicyclic gear trains, such as one designated as reference 1002, corresponding to reference 900 in Figure 9, all driven by a central fuel-powered engine identified as reference 1001.

It should be understood that the present invention is not limited to the described embodiments and that variations can be applied without going outside of the scope of the claims.

## Claims

1. An unmanned aerial vehicle, UAV (100), comprising:
- a fuel-driven motor (1001) configured to generate mechanical power;
- a propulsion system comprising a set of propellers (101-104) configured to achieve controlled drive of the UAV (100) by generating lift and thrust;
- a transmission assembly (106) operatively connected between the fuel-driven motor and the propulsion system (101-104), the transmission assembly configured to transfer the mechanical power from the fuel-driven motor to the propulsion system (101-104);
- a control unit configured to control the generated lift and thrust;
**CHARACTERIZED IN THAT**
the transmission assembly comprises:
- a set of epicyclic gear trains, each epicyclic gear train associated with a corresponding propeller and each comprising:
∘ a central sun (709);
∘ at least one planet gear (704) engaged with the central sun (709) and mounted on a rotatable carrier (707);
∘ and a ring gear (705) surrounding the planet gear(s) (704) engaged therewith;
wherein the mechanical power is transferred from the fuel-driven motor (1001) to the propellers (101-104) through a mechanical link between the set central suns (709) and the rotatable carriers (707);
- a set of actuators, each actuator engaged with a ring of an associated epicyclic gear train and configured to control a movement thereof;
and wherein the control unit is further configured to control the set of actuators (703) such that when the mechanical power is transferred the fuel-driven motor's operation is maintained at its most efficient working point.

2. The UAV (100) according to claim 1, wherein the mechanical link comprises a first link from the fuel-driven motor (1001) to the set of rotatable carries (707) and a second link from the set of central suns (709) to associated propellers (101-104).

3. The UAV (100) according to claim 1, wherein the mechanical link comprises a first link from the fuel-driven motor (1001) to the set of central suns (709) and a second link from the set of rotatable carries (707) to associated propellers (101-104).

4. The UAV (100) according to any of the preceding claims, further comprising a central gearbox (302) connected to the fuel-driven motor's output shaft and configured split and distributed torque to the set of propellers (101-104) through the mechanical links.

5. The UAV (100) according to any of the preceding claims, wherein the set of actuators (703) are engaged with associated rings through a set of worm drives.

6. The UAV (100) according to any of the preceding claims, wherein the set of actuators (703) comprises a set of electrical motors configured to operate in a driving mode to generate mechanical power for controlling the movement of an associated ring, the set of electrical motors operatively connected to a power source configured to supply electrical energy.

7. The UAV (100) according to claim 6, wherein the control unit is further configured to detect a deceleration condition of an electrical motor and, in response, transition said electrical motor from the driving mode to a regenerative mode thereby converting mechanical energy from the decelerating motor into energy to the power source.

8. The UAV (100) according to one of the claims 6 to 7, wherein the power source is a battery pack and/or a capacitor bank.

9. The UAV (100) according to any of the claims 6 to 8, wherein the power source is a detachable power source.

10. The UAV (100) according to any of the preceding claims, wherein the fuel-driven motor is one of the group of a gasoline engine, a diesel engine, a natural gas engine, a propane engine, a methanol engine, a two-stroke engine, a turboprop engine, a turbojet engine, a jet engine, a rotary engine, a biofuel engine, a hydrogen engine.

11. The UAV (100) according to any of the preceding claims, further comprising a detachable fuel storage for storing fuel for the fuel-driven motor.

12. A method for controlling the UAV (100) according to any of the preceding claims comprising the steps of:
- controlling the propulsion system to achieve controlled drive of the UAV by generating lift and thrust; and
- simultaneously controlling the actuators such that when the mechanical power is transferred the fuel-driven motor's operation is maintained at its most efficient working point.

13. A control unit configured to perform the method according to claim 12.
